# EUROPÄISCHE PATENTSCHRIFT

(11) **EP 1 044 127 B1**
(45) Veröffentlichungstag und Bekanntmachung des Hinweises auf die Patenterteilung: **05.03.2003**
(21) Anmeldenummer: 99959220.7
(22) Anmeldetag: 21.10.1999
(51) Int. Cl.: B62D 1/18

(54) **VERFAHREN ZUR FESTSETZUNG EINER VERSTELLBAREN KRAFTFAHRZEUGLENKSÄULE UND VORRICHTUNG ZUR DURCHFÜHRUNG DES VERFAHRENS**
METHOD FOR FIXING AN ADJUSTABLE AUTOMOBILE STEERING COLUMN AND DEVICE FOR CARRYING OUT THE METHOD
PROCEDE POUR FIXER UNE COLONNE DE DIRECTION REGLABLE DE VEHICULE AUTOMOBILE ET DISPOSITIF POUR LA MISE EN OEUVRE DU PROCEDE

(30) Priorität: 07.11.1998 DE 19851390
(43) Veröffentlichungstag der Anmeldung: 18.10.2000
(73) Patentinhaber: Nacam Deutschland GmbH, 49448 Lemförde (DE)
(72) Erfinder: APPELT, Herbert, D-49356 Diepholz (DE); GRAMS, Kay-Uwe, D-49692 Cappeln (DE); MICHALSKI, Herniu, D-28816 Brinkum (DE); SCHÄFER, Burkhard, D-27777 Ganderkesee (DE); SCHMIDT, Rainer, D-49356 Diepholz (DE)
(86) Internationale Anmeldenummer: DE9903375
(87) Internationale Veröffentlichungsnummer: WO00027684

(56) Entgegenhaltungen:
- DE-U- 9 115 978

## Beschreibung

Die Erfindung betrifft ein Verfahren zur Festsetzung einer in axialer und/oder vertikaler Richtung verstellbaren Kraftfahrzeuglenksäule, die eine Lenkwelle in einem verstellbaren Gehäuse aufweist, an einer karosseriefesten Halterung der Lenksäule des Kraftfahrzeuges sowie eine Vorrichtung zur Durchführung des Verfahrens.

Derartige gattungsgemäße Verfahren zur Festsetzung verstellbarer Kraftfahrzeuglenksäulen werden im Stand der Technik auf unterschiedliche Weise verwirklicht. Die Notwendigkeit der Festsetzung ergibt sich aus der Tatsache, daß bei der heute üblichen Verwendung von Airbags als Insassenschutzsystem eine Relativbewegung im Verstellmechanismus der Lenksäule im Moment eines Unfalls weitestgehend ausgeschlossen werden muß, damit der Airbag als Aufprallschutz für den Fahrer seine volle Wirksamkeit entfalten kann.

Die Haltekräfte im Verstellmechanismus der Lenksäule werden im Stand der Technik im wesentlichen durch form- und kraftschlüssige Klemmechanismen bereitgestellt, wobei diese Klemmechanismen im Rahmen der Funktionsintegration sowohl die hohen Haltekräfte im Falle eines Unfalls bereitstellen müssen als auch gleichzeitig dazu dienen, die Lenksäule nach einer entsprechend den Wünschen des Fahrers gewählten Positionierung in axialer und/oder vertikaler Lage der Lenksäule durch den Fahrer in dieser gewählten Position festzusetzen.

Formschlüssige Klemmechanismen werden beispielsweise durch Zahnsegmente verwirklicht, wobei sowohl karosserieseitig als auch am verstellbaren Lenksäulengehäuse jeweils ein Zahnsegment angeordnet ist. Zur Verstellung der Lenksäule werden die normalerweise durch eine Verriegelungsvorrichtung miteinander in Eingriff befindlichen Zahnflanken durch Federwirkung in Abstand zueinander gebracht und nach erfolgter Einstellung durch die Verriegelungsvorrichtung wiederum die Zahnsegmente miteinander in Eingriff gebracht. Derartige formschlüssige Klemmechanismen haben den Nachteil, daß eine stufenlose Verstellbarkeit zwischen Lenksäule und Karosserie nicht gegeben ist, da eine Verriegelung durch Ineinandergreifen der Zahnsegmente immer nur in Stufen entsprechend der Zahnteilung der Zahnsegmente erfolgen kann. Darüber hinaus kann bei den verwendeten Zahnsegmenten die Problematik auftreten, daß der Fahrer die Lenksäule in eine solche Lage gebracht hat, in der die sich gegenüberliegenden Zahnsegmente mit ihren Spitzen aufeinanderstehen, so daß eine Verriegelung gänzlich ausgeschlossen ist. Schließlich besteht bei dieser Art formschlüssiger Klemmechanismen eine relativ große Bauteilvielfalt und es ist zur sicheren Funktion derartiger Klemmechanismen bei der Montage und Justierung ein hoher Arbeitsaufwand erforderlich.

Um eine stufenlose Verstellung des Lenkrades zu gewährleisten, sind im Stand der Technik darüberhinaus kraftschlüssige Klemmechanismen bekannt. Diese werden beispielsweise durch Lamellen verwirklicht, wobei eine größere Anzahl von Lamellen jeweils an Lenksäulengehäuse und an der karosserieseitigen Halterung vorhanden sind, die ineinander verschiebbar sind und nach Wahl der Lenksäulengehäuselage durch geeignete Maßnahmen zusammengepreßt werden. Um im Falle eines Unfalls ausreichende Haltekräfte bereitstellen zu können, erfordern diese kraftschlüssigen Klemmechanismen mit Lamellen ein relativ großes Bauraumvolumen und besitzen ein hohes Gewicht. Darüber hinaus besteht der Nachteil, daß kraftschlüssige Klemmechanismen extrem hohe Klemmkräfte bereitstellen müssen, die naturgemäß zu einer hohen Bauteilbeanspruchung der gesamten Lenksäulenfestsetzung führen. Als weiterer Nachteil dieser Art der Lenksäulenfestsetzung ist zu erwähnen, daß kraftschlüssige Klemmechanismen üblicherweise am Bedienhebel für den Gesamtmechanismus hohe Verstellkräfte bedingen.

Aufgabe der vorliegenden Erfindung ist es daher, die Nachteile bestehender form- und kraftschlüssiger Klemmechanismen zur Festsetzung des Lenksäulengehäuses an einer karosserieseitigen Halterung zu beseitigen und zum einen im normalen Bedienungsfall eine ausreichende Festsetzung bei leichter Bedienbarkeit der Gesamtvorrichtung zu gewährleisten. Gleichzeitig soll zum anderen im Moment eines Unfalls sichergestellt sein, daß eine Relativbewegung im Verstellmechanismus der Lenksäule ausgeschlossen ist, um eine ausreichende Wirkung des Airbags zu gewährleisten.

Diese Aufgabe wird erfindungsgemäß durch das gattungsgemäße Verfahren gelöst, bei dem die im kennzeichnenden Teil genannten Merkmale verwirklicht sind. Das Verfahren ist dadurch charakterisiert, daß im Moment des Aufpralls des Kraftfahrzeuges auf ein Hindernis durch pyrotechnische Mittel eine formschlüssige Verbindung zwischen verstellbarem Lenksäulengehäuse und karosseriefester Halterung geschaffen wird. Durch diese erfindungsgemäße Maßnahme erfolgt eine funktionale Trennung der Festsetzung des Lenksäulengehäuses im normalen Bedienungsfall und im Falle eines Unfalls. Die üblicherweise vorhandenen Klemmechanismen dienen nunmehr nur noch der Festsetzung der Lenksäule im Rahmen der normalen Bedienung, wobei sie nur kleine Haltekräfte bereitstellen müssen. Die im Falle eines Unfalls notwendigen extrem hohen Haltekräfte zwischen dem verstellbaren Lenksäulengehäuse und der karosserieseitigen Halterung werden durch eine spezielle formschlüssige Verbindung bereitgestellt, die speziell für diesen außergewöhnlichen Einsatzfall gestaltet und berechnet werden kann.

Die Entkopplung und Funktionstrennung der Verriegelungssysteme für den normalen Betriebsfall sowie für das außergewöhnliche Eintreten eines Unfalls ermöglicht es erstmals, beide Systeme getrennt für ihre Einsatzzwecke zu optimieren.

Die erfindungsgemäße Vorrichtung zur Durchführung des o. a. neuartigen Verfahrens zur Festsetzung einer in axialer und/oder vertikaler Richtung verstellbaren Kraftfahrzeuglenksäule ist hierbei dadurch gekennzeichnet, daß sie mindestens ein pyrotechnisches Modul und mindestens ein durch das pyrotechnische Modul steuerbares Element zur Herstellung der formschlüssigen Verbindung von verstellbarem Lenksäulengehäuse und karosseriefester Halterung der Lenksäule aufweist. Als steuerbares Element kann beispielsweise eine Kolbeneinheit, vorzugsweise eine beidseitig wirkende Kolben-Zylinder-Einheit eingesetzt werden.

Das pyrotechnische Modul und das zur formschlüssigen Verbindung dienende Element lassen sich entsprechend einer besonderen erfindungsgemäßen Gestaltung als Baueinheit zusammenfassen und zwischen Lenksäulengehäuse und karosseriefester Halterung der Lenksäule anordnen. Durch diese konstruktive Ausführung lassen sich die Montagekosten für den Einbau dieser modularen Baueinheit senken sowie das gesamte benötigte Bauraumvolumen verringern. Darüber hinaus ist eine Reduzierung der Bauteilevielfalt gegeben, da die spezielle erfindungsgemäße Baueinheit für ihren Anwendungsfall im Rahmen der Funktionsintegration optimiert werden kann.

Eine weitere spezielle Ausgestaltung der erfindungsgemäßen Vorrichtung sieht vor, daß das pyrotechnische Modul einen Treibsatz aufweist, der durch einen Steuerimpuls des kraftfahrzeugeigenen Bordelektroniknetzes gezündet wird. Die Zündung des pyrotechnischen Treibsatzes läßt sich hierbei mit der Ansteuerung eines im Kraftfahrzeug eingebauten Airbagmoduls abstimmen, so daß der Steuerimpuls zur Zündung des pyrotechnischen Treibsatzes gleichzeitig oder zeitlich geringfügig versetzt zur Airbagzündung erfolgt.

Eine andere Variante der Ansteuerung des pyrotechnischen Moduls sieht vor, eine seperate Ansteuerung unabhängig vom Bordelektoniknetz des Kraftfahrzeuges vorzusehen.

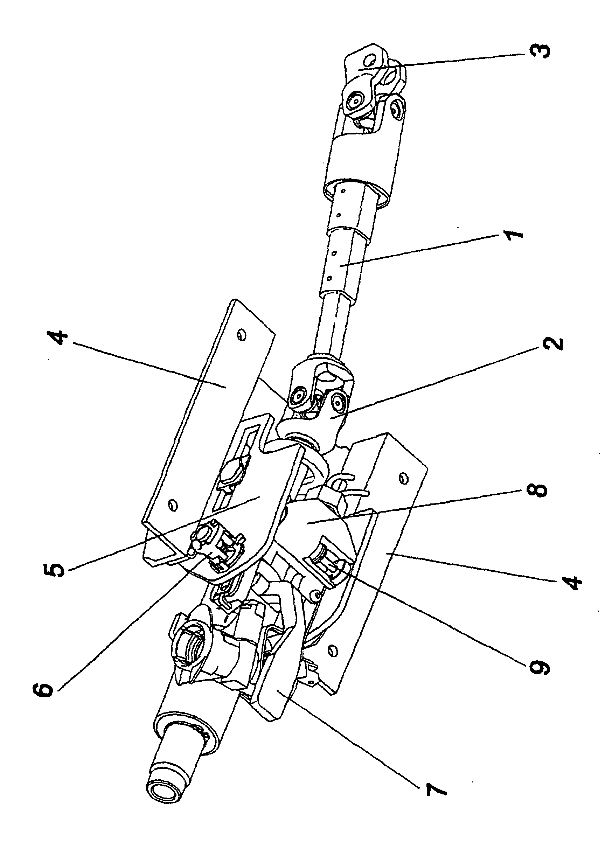

Im folgenden wird ein Ausführungsbeispiel der erfindungsgemäßen Vorrichtung zur Festsetzung einer in axialer und/oder vertikaler Richtung verstellbaren Kraftfahrzeuglenksäule mit den erfindungsgemäßen Verfahrensschritten anhand der beigefügten Zeichnung näher erläutert.

Die beigefügte Figur stellt in perspektivischer Darstellung eine Gesamtbaueinheit einer Kraftfahrzeuglenksäule mit der erfindungsgemäßen Vorrichtung dar.

Die dargestellte Kraftfahrzeuglenksäule weist eine Lenkwelle 1 mit daran angeordneten kardanischen Gelenken 2 und 3 auf, die in einem Lenksäulengehäuse 5 aufgenommen ist. Die aus Lenkwelle 1 und Lenksäulengehäuse 5 sowie ergänzenden, hier nicht näher erläuterten Bauteilen bestehende Kraftfahrzeuglenksäule ist an einer karosseriefesten Halterung 4 festsetzbar. Die Festsetzung geschieht unter normalen Betriebsbedingungen mit Hilfe eines Klemmechanismus 6, der über einen durch den Fahrer zu betätigenden Handhebel 7 arretiert und gelöst werden kann.

Zwischen dem Lenksäulengehäuse 5 und der karosseriefesten Halterung 4 ist als Verbindungselement ein pyrotechnisches Modul 8 angeordnet. Dieses pyrotechnische Modul 8 ist zur Steuerung eines Elementes 9 zur formschlüssigen Verbindung von verstellbarem Lenksäulengehäuse 5 und karosseriefester Halterung 4 eingerichtet. Pyrotechnisches Modul 8 und Element 9 sind als gemeinsame Baueinheit gestaltet, wodurch eine montagefreundliche kompakte Einheit entsteht. Innerhalb dieser Baueinheit befindet sich ein durch einen Steuerimpuls des kraftfahrzeugeigenen Bordelektroniknetzes zündbarer pyrotechnischer Treibsatz. Der Steuerimpuls für den pyrotechnischen Treibsatz kann je nach Bauanforderungen, die an die Kraftfahrzeuglenksäule gestellt werden auch unabhängig vom kraftfahrzeugeigenen Bordelektroniknetz gezündet werden.

### Bezugszeichenliste

- 1 -: Lenkwelle
- 2 -: kardanisches Gelenk
- 3 -: kardanisches Gelenk
- 4 -: karosseriefeste Halterung
- 5 -: Lenksäulengehäuse
- 6 -: Klemmechanismus
- 7 -: Handhebel
- 8 -: Pyrotechnisches Modul
- 9 -: Element

## Patentansprüche

1. Verfahren zur Festsetzung einer in axialer und/oder vertikaler Richtung verstellbaren Kraftfahrzeuglenksäule, die eine Lenkwelle in einem verstellbaren Lenksäulengehäuse aufweist an einer karosseriefesten Halterung der Lenksäule des Kraftfahrzeuges
**dadurch gekennzeichnet, daß**
im Fall eines Unfalles, im Moment des Aufpralles des Kraftfahrzeuges auf ein Hindernis durch pyrotechnische Mittel (8) eine formschlüssige Verbindung zwischen verstellbarem Lenksäulengehäuse (5) und karosseriefester Halterung (4) der Lenksäule geschaffen wird.

2. Vorrichtung zur Durchführung des Verfahrens nach Anspruch 1,
**dadurch gekennzeichnet, daß**
sie mindestens ein pyrotechnisches Modul (8) und mindestens ein durch das pyrotechnische Modul steuerbares Element (9) zur formschlüssigen Verbindung von verstellbarem Lenksäulengehäuse (5) und karosseriefester Halterung (4) der Lenksäule aufweist.

3. Vorrichtung nach Anspruch 2,
**dadurch gekennzeichnet, daß**
das Element (9) zur Herstellung der formschlüssigen Verbindung und das pyrotechnische Modul (8) als Baueinheit gestaltet und zwischen Lenksäulengehäuse (5) und karosseriefester Halterung (4) angeordnet sind.

4. Vorrichtung nach Anspruch 2 oder 3,
**dadurch gekennzeichnet, daß**
das pyrotechnische Modul (8) einen pyrotechnischen Treibsatz aufweist, der durch einen Steuerimpuls des kraftfahrzeugeigenen Bordelektroniknetzes gezündet wird.

5. Vorrichtung nach Anspruch 2 oder 3,
**dadurch gekennzeichnet, daß**
das pyrotechnische Modul (8) einen pyrotechnischen Treibsatz aufweist, der durch einen unabhängig vom kraftfahrzeugeigenen Bordelektroniknetz bereitgestellten Steuerimpuls gezündet wird.

6. Vorrichtung nach Anspruch 4,
**dadurch gekennzeichnet, daß**
der Steuerimpuls zur Zündung des pyrotechnischen Treibsatzes gleichzeitig mit der Ansteuerung eines im Kraftfahrzeug eingebauten Airbagmoduls erfolgt.

7. Vorrichtung nach Anspruch 4,
**dadurch gekennzeichnet, daß**
der Steuerimpuls zur Zündung des pyrotechnischen Treibsatzes zeitlich versetzt zur Ansteuerung eines im Kraftfahrzeug eingebauten Airbagmoduls erfolgt.

## Claims

1. A method of locking a motor vehicle steering column which is adjustable in the axial and/or vertical direction and has a steering shaft located in an adjustable steering column housing mounted on a steering column bracket fixed to the bodywork of the vehicle, **characterised in that** in case of an accident, at the moment of collision of the motor vehicle with an obstacle a positive connection between the adjustable steering column housing (5) and the bracket (4) fixed to the bodywork is established by pyrotechnic means (8).

2. A device for implementing the method according to Claim 1, **characterised in that** it comprises at least one pyrotechnic module (8) and at least one element (9) controllable by means of the pyrotechnic module for positively connecting the adjustable steering column housing (5) to the steering column bracket (4) fixed to the bodywork.

3. A device according to Claim 2, **characterised in that** the element (9) for establishing the positive connection and the pyrotechnic module (8) are configured as a constructional unit and arranged between the steering column housing (5) and the bracket (4) fixed to the bodywork.

4. A device according to Claim 2 or 3, **characterised in that** the pyrotechnic module (8) includes a pyrotechnic propellant which is ignited by means of a control pulse of the vehicle's onboard electronic network.

5. A device according to Claim 2 or 3, **characterised in that** the pyrotechnic module (8) includes a pyrotechnic propellant which is ignited by means of a control pulse supplied independently of the vehicle's onboard electronic network.

6. A device according to Claim 4, **characterised in that** the control pulse for igniting the pyrotechnic propellant occurs simultaneously with the triggering of an airbag module installed in the motor vehicle.

7. A device according to Claim 4, **characterised in that** the control pulse for igniting the pyrotechnic propellant occurs in a time-displaced manner with respect to the triggering of an airbag module installed in the motor vehicle.

## Revendications

1. Procédé pour fixer une colonne de direction de véhicule automobile, réglable en direction axiale et/ou verticale, comportant un arbre de direction reçu dans un boîtier de colonne de direction réglable, sur un support, fixé rigidement à la carrosserie, de la colonne de direction du véhicule automobile, **caractérisé en ce que**, en cas d'accident, au moment de l'impact du véhicule automobile sur un obstacle, une liaison à complémentarité de forme est créée, à l'aide de moyens pyrotechniques (8), entre le boîtier de colonne de direction (5) réglable et le support (4), fixé rigidement à la carrosserie, de la colonne de direction.

2. Dispositif de mise en oeuvre du procédé selon la revendication 1, **caractérisé en ce qu'**il comporte au moins un module pyrotechnique (8) et au moins un élément (9) pouvant être commandé par le module pyrotechnique, afin d'établir une liaison par complémentarité de forme, entre le boîtier de colonne de direction (5) réglable et le support (4) fixé rigidement à la carrosserie.

3. Dispositif de mise en oeuvre du procédé selon la revendication 2, **caractérisé en ce que** l'élément (9) devant établir la liaison par complémentarité de forme et le module pyrotechnique (8) sont réalisés sous la forme d'un sous-ensemble et sont disposés entre le boîtier de colonne de direction (5) et le support (4) fixé rigidement à la carrosserie.

4. Dispositif selon la revendication 2 ou 3, **caractérisé en ce que** le module pyrothechnique (8) comporte une cartouche propulsive, qui est mise à feu par une impulsion de commande fournie par le réseau électronique de bord propre au véhicule.

5. Dispositif selon la revendication 2 ou 3, **caractérisé en ce que** le module pyrotechnique (8) comporte une cartouche propulsive mise à feu par une impulsion de commande fournie indépendamment du réseau électronique de bord propre au véhicule.

6. Dispositif selon la revendication 4, **caractérisé en ce que** l'impulsion de commande servant à la mise à feu de la cartouche propulsive pyrotechnique est simultanée à la commande d'un module à sac gonflable intégré au véhicule automobile.

7. Dispositif selon la revendication 4, **caractérisé en ce que** l'impulsion de commande servant à la mise à feu de la cartouche propulsive pyrotechnique est décalée temporellement par rapport à la commande d'un module à sac gonflable intégré au véhicule automobile.
